# EUROPÄISCHE PATENTSCHRIFT

(11) **EP 2 846 941 B1**
(45) Veröffentlichungstag und Bekanntmachung des Hinweises auf die Patenterteilung: **20.01.2016**
(21) Anmeldenummer: 13724200.4
(22) Anmeldetag: 08.05.2013
(51) Int. Cl.: B21B 27/10

(54) **VORRICHTUNG ZUM KÜHLEN VON WALZEN**
DEVICE FOR COOLING ROLLS
DISPOSITIF DESTINÉ À REFROIDIR DES CYLINDRES

(30) Priorität: 11.05.2012 DE 102012207957; 29.10.2012 DE 102012219722
(43) Veröffentlichungstag der Anmeldung: 18.03.2015
(73) Patentinhaber: SMS group GmbH, 40237 Düsseldorf (DE)
(72) Erfinder: ALKEN, Johannes, 57076 Siegen (DE); KIPPING, Matthias, 57562 Herdorf (DE); SEIDEL, Ralf, 35690 Dillenburg (DE); MÜLLER, Torsten, 57223 Kreuztal (DE)
(74) Vertreter: Klüppel, Walter
(86) Internationale Anmeldenummer: PCT/EP2013/059623
(87) Internationale Veröffentlichungsnummer: WO 2013/167674

(56) Entgegenhaltungen:
- JP-A- S5 482 348
- JP-U- S59 162 107
- US-A- 3 357 224

## Beschreibung

### Gebiet der Erfindung

Die vorliegende Erfindung ist auf eine Vorrichtung zum Kühlen von Walzen, insbesondere von Arbeitswalzen gerichtet. Die Erfindung betrifft weiterhin ein Verfahren zur Verwendung der Vorrichtung sowie eine Kühleinrichtung.

### Stand der Technik

Die US 5,212,975 offenbart eine Vorrichtung zur Kühlung einer Walze In einer Walzstraße, welche mindestens einen Sprühbalken mit mehreren Sprühdüsen umfasst. Dieser Sprühbalken kann translatorisch, drehend oder schwenkend bewegt werden, um den Winkel des Balkens zu der Walzenoberfläche oder dessen Abstand von der Walze einzustellen. Nachteilig an derartigen Vorrichtungen ist eine verbesserungswürdige Effizienz. Insbesondere werden vergleichsweise große Kühlmittelmengen zur ausreichenden Kühlung benötigt.

Die WO 2010/099925 A1 offenbart ein Verfahren und eine Kühlvorrichtung zum Kühlen der Walzen eines Walzgerüstes. Dabei werden die Walzen an mindestens zwei partiellen Bereichen entlang ihres Umfanges mit einer Kühlflüssigkeit gekühlt und durch mindestens zwei der Walzenoberfläche gegenüberliegende, gelenkig miteinander verbundene Kühlschalensegmente gekühlt. Nachteilig an dieser Anordnung ist beispielweise die komplexe Konstruktion der mehrteiligen Kühlschale. Ein weiterer Nachteil kann in einer gemäß dieser Vorrichtung eingeengten Wegführung der Kühlmittelströmung aus dem Kühlspalt bestehen, welche in turbulenten Strömungen bzw. unerwünschten Querströmungen im Kühlspalt resultieren kann.

Gemäß der JP 63303609 werden ein Verfahren und eine Vorrichtung zur Kühlung einer Walze offenbart, bei denen eine dünne Platte gegenüberliegend der Walzenoberfläche einer Arbeitswalze vorgesehen wird. Der zwischen der Walzenoberfläche und der Platte gebildete Spalt ist durch Stellschrauben manuell einstellbar. Das obere und das untere Ende der Schale sind mit Wasserbereitstellungskästen und Wasserableitungskästen versehen. Die Vorrichtung wird ferner nach oben und unten an der Walzenoberfläche durch Bereitstellung einer Pressschraube abgedichtet. Nachteilig an dieser Vorrichtung ist zum Beispiel, dass deren Einstellung manuell erfolgen muss. Dies gilt insbesondere vor dem Hintergrund von mehreren täglichen Walzenwechseln in einer Walzstraße. Verfügt eine Walzstraße beispielsweise, wie üblich, über sieben Walzgerüste mit jeweils zwei Arbeitswalzen, werden diese in vielen Fällen viermal pro Tag gewechselt. In diesem Fall muss die manuelle Einstellung 56-mal pro Tag erfolgen. Ferner sind gemäß dem Stand der Technik die Platten bzw. Kilhlsohalen an die Walzeneinbaustücke gekoppelt bzw. am Walzgerüst montiert. Dies erfordert bei jedem Walzenwechsel den Abbau der Kühlvorrichtung und/oder die Bereitstellung von zum Beispiel 56 speziell angepassten Einbaustücken. Die dadurch entstehenden Kosten sind erheblich.

Ferner offenbart die US 3,357,224 eine Vorrichtung zum Kühlen einer Walze zum Walzen von Walzgut, Diese Vorrichtung umfasst eine der Umfangsfläche der Walze gegenüberliegende Kühlschale zum Bilden eines mit Kühlfluid durchströmbaren Kühlspalts zwischen der Kühlschale und der Walze. Die Breite des Kühlspalts ist verstellbar.

Die JP 54-82348 A offenbart eine weitere Vorrichtung zum Kühlen einer Walze zum Walzen von Walzgut, wobei sich eine Kühlschale der Vorrichtung über einen Teilbereich des Umfangs der Walze erstreckt und einen Kühlspalt zwischen der Walze und der Kühlschale bildet. Die beschriebene Kühlschale kann mittels einer Kolbenzylindereinheit bewegt werden, wodurch der Kühlspalt verstellbar ist.

Die JP 59-162107 U offenbart ebenfalls eine Vorrichtung zum Kühlen einer Walze zum Walzen von Walzgut, wobei sich eine Kühlschale der Vorrichtung über einen Teilbereich des Umfangs der Walze erstreckt und einen Kühlspalt zwischen der Walze und der Kühlschale bildet. Die Kühlschale ist in einem Mittenbereich schwenkbar an einer Verstelleinrichtung befestigt.

Eine Aufgabe der Erfindung ist es eine verbesserte Kühlvorrichtung für eine Walze, insbesondere für eine Arbeitswalze zum Walzen von Metall bereitzustellen.

Eine weitere Aufgabe kann darin bestehen, eine automatische Einstellbarkeit der Vorrichtung bzw. des Abstands der Vorrichtung von der zu kühlenden Walzenoberfläche, insbesondere nach einem Walzenwechsel, zu ermöglichen.

### Offenbarung der Erfindung

Die Erfindung ist durch die Merkmale des Anspruchs 1 gegeben, gemäß dem eine Vorrichtung zum Kühlen einer Walze, insbesondere einer Arbeitswalze zum Walzen von Walzgut, bereitgestellt wird. Dabei umfasst die Vorrichtung zumindest eine einem Teilbereich des Umfangs der Walzenoberfläche gegenüberliegende Kühlschale zum Bilden eines mit Kühlfluid durchströmbaren Kühlspalts zwischen dem Teilbereich der Walzenoberfläche und der Kühlschale sowie einen um einen Aufhängungspunkt schwenkbaren Hebel, welcher in Richtung der Walzenoberfläche schwenkbar ist und mit einer, In Umfangsrichtung der Walze betrachtet, ersten Hälfte der Kühlschale drehbar verbunden ist, wobei der Kühlspalt durch Schwenken des Hebels wahlweise verringerbar oder vergrößerbar ist. Ferner umfasst die erfindungsgemäße Vorrichtung eine um einen weiteren Aufhängungspunkt schwenkbare längenveränderliche Linearführung, welche mit der, in Umfangsrichtung der Walze betrachtet, zweiten Hälfte der Kühlschale drehbar verbunden ist.

Durch diese relativ einfache mechanische Anordnung kann durch die Schwenkbewegung des Hebels die Kühlschale definiert angestellt werden bzw. der Abstand zwischen Schale und Spalt angepasst werden. Somit wird durch die erfindungsgemäße Konstruktion eine vereinfachte bzw. verbesserte Kühlvorrichtung zur Kühlung eines Oberflächenbereichs einer Walze bereitgestellt.

Gemäß einer bevorzugten Ausführungsform sind die Aufhängungspunkte gegenüberliegend der von der Walzenoberfläche abgewandten Seite der Kühlschale angeordnet. Eine derartige Anordnung erlaubt zum Beispiel eine besonders kompakte Bauform der Vorrichtung.

Gemäß einer weiteren bevorzugten Ausführungsform erstreckt sich die jeweils durch die Aufhängungspunkte erstreckende Schwenkachse im Wesentlichen parallel zur Walzenachse. Bevorzugt fallen zudem die beiden Aufhängungspunkte zusammen bzw. beide Aufhängungspunkte liegen in einem Punkt. Auch dieses Merkmal vereinfacht wiederum die Konstruktion der Vorrichtung und erleichtert die Berechenbarkeit der Bewegungen bzw. der Positionen der Elemente der Kühlvorrichtung.

Gemäß einer weiteren bevorzugten Ausführungsform umfasst die Vorrichtung weiterhin eine Düse zum Einleiten von Kühlmedium, vorzugsweise von Kühlflüssigkeit, in den Spalt. Diese Düse ist zudem vorzugsweise zum im Wesentlichen tangentialen Einleiten des Kühlmediums in den Spalt ausgebildet und angeordnet, insbesondere entgegen der Drehrichtung der Walze und, in Umfangsrichtung betrachtet, an einem Ende der Kühlschale angeordnet. Durch eine derartige Anordnung kann die Kühlwirkung der Vorrichtung weitergehend verbessert werden, wobei insbesondere eine hohe Relativgeschwindigkeit zwischen der Walzenoberfläche und dem Kühlfluid die Wärmeübertragung steigert. Eine im Wesentlichen tangentiale Einleitung des Kühlfluids in den Spalt kann zudem die Grenzschichtdicke der Strömung der Kühlflüssigkeit im Spalt verringern helfen und so wiederum die Kühlwirkung verbessern.

Gemäß einer weiteren bevorzugten Ausführungsform umfasst die Vorrichtung eine Antriebseinheit zum Schwenken des Hebels um den Aufhängungspunkt. Solche Antriebseinheiten können zum Beispiel Elektromotoren, pneumatische Antriebseinheiten oder hydraulische Antriebseinheiten umfassen.

Gemäß einer weiteren bevorzugten Ausführungsform umfasst die Antriebseinheit eine Kolbenzylindereinheit, welche bevorzugt an einem ihrer Enden drehbar mit der ersten Hälfte des Hebels zum Schwenken des Hebels verbunden und an ihrem zweiten Ende drehbar gelagert ist. Vorzugsweise greift dabei die Antriebseinheit mit ihrem ersten Ende an dem ersten Ende des Hebels an. Dieses Merkmal ermöglicht eine besonders gute Kraftübertragung der Antriebseinheit auf den Hebel und erhöht somit die Effizienz der Vorrichtung.

Gemäß einer weiteren bevorzugten Ausführungsform weist der Hebel einen ersten Endbereich und einen zweiten Endbereich auf, wobei der erste Endbereich drehbar mit der, in Umfangsrichtung der Walze betrachtet, ersten Hälfte der Kühlschale verbunden ist und dessen zweiter Endbereich schwenkbar an dem ersten Aufhängungspunkt lagerbar ist. Optional weist die längenveränderliche Linearführung einen ersten Endbereich und einen zweiten Endbereich auf, wobei deren erster Endbereich drehbar mit der in Umfangsrichtung der Walze betrachtet zweiten Hälfte der Kühlschale verbunden ist und deren zweiter Endbereich schwenkbar an dem weiteren Aufhängungspunkt lagerbar ist.

Gemäß einer weiteren bevorzugten Ausführungsform umfasst die Kühlschale an ihrer ersten Hälfte ein erstes Element bzw. Mittel zur Kontaktierung der Walzenoberfläche und an ihrer zweiten Hälfte ein zweites Element bzw. Mittel zur Kontaktierung der Walzenoberfläche, wobei - optional - die Elemente je eine drehbare Rolle oder einen Gleitstein bzw. -klotz zur Kontaktierung der Walzenoberfläche umfassen. Im Falle einer drehbaren Rolle, erstreckt sich die Rotationsachse der Rolle vorzugsweise parallel zu der Rotationsachse der Walze. Durch dieses Merkmal kann die Kühlschale Kontakt zur Walzenoberfläche herstellen und so zum Beispiel eine Bestimmung der Position und/oder des Durchmessers der Walze ermöglichen. Dies ist insbesondere vor dem Hintergrund relevant, dass die Walzen einen Abschliffbereich aufweisen. Normalerweise muss die Höhe des Kühlspalts nach einem Walzenwechsel aufgrund des normalerweise durch den Wechsel veränderten Walzendurchmessers neu manuell eingerichtet werden. Mit anderen Worten muss der Abstand der Kühlschale zur Walzenoberfläche neu justiert werden. Dies ist insbesondere bei einer Vielzahl von Walzenwechseln zeit- und kostenaufwändig. Darüber hinaus wird festgestellt, dass Sensoren zur Abstandsmessung (insbesondere optische Sensoren) häufig fehleranfällig sind und sich daher wenig für raue Walzwerksbedingungen eignen. Gemäß einer weiteren bevorzugten Ausführungsform kontaktiert das erste Element in Umfangsrichtung der Walze betrachtet die Walzenoberfläche vor dem Ende der ersten Hälfte der Kühlschale und das zweite Element die Walzenoberfläche hinter dem Ende der zweiten Hälfte der Kühlschale.

Gemäß einer weiteren bevorzugten Ausführungsform sind der Hebel und die Linearführung jeweils derart um ihren jeweiligen Aufhängungspunkt schwenkbar angeordnet, dass durch Schwenken des Hebels sowie ein Schwenken und/oder eine Längenveränderung der Linearführung die Elemente mit der Walzenoberfläche in Kontakt bringbar und wieder von dieser abhebbar sind. Die Linearführung kann im Allgemeinen teleskopartig ausgebildet sein.

Gemäß einer weiteren bevorzugten Ausführungsform der Vorrichtung, umfasst die Vorrichtung weiterhin ein Auswertungssystem zur Bestimmung der Position der Walze und/oder zum Einstellen der Höhe des Kühlspalts, welches bei bzw. durch Kontaktierung der Walzenoberfläche durch die Elemente und nach Maßgabe der bekannten Geometrie und/oder Anordnung des Hebels, der Linearführung, der Kühlschale, der Lage der Aufhängungspunkte und des Durchmessers der Walze zur Berechnung der Höhe des Kühlspalts ausgebildet ist. Ob bzw. wann die Kühlschale in Kontakt mit der Walzenoberfläche steht, kann zum Beispiel anhand eines Druckgebers einer Kolbenzylindereinheit festgestellt werden. Im Falle eines elektrischen Antriebs, kann dies zum Beispiel durch eine Antriebsstrommessung festgestellt werden. Ferner könnte ein Winkelmessgerät an den Aufhängungspunkten installiert sein, um die Winkelstellung bzw. den Schwenkwinkel des Hebels oder der Linearführung zu bestimmen. Zusätzlich oder alternativ könnte auch ein Weggeber an den Antriebseinheiten und/oder an der Linearführung vorgesehen sein, sodass anhand der bekannten Geometrie des Hebels, der Linearführung und der Kühlschale auf die Walzenposition und ebenfalls auf den Abstand zwischen Kühlschale und Walzenoberfläche geschlossen werden könnte. Bevorzugt werden die Elemente wieder von der Walzenoberfläche für den Walzbetrieb abgehoben. Somit wird ein Verschleiß der Vorrichtung ausgeschlossen.

Gemäß einer weiteren bevorzugten Ausführungsform umfasst die längenveränderliche Linearführung ein Schubgelenk, welches vorzugsweise einen Zylinder und einen in dem Zylinder geführten Kolben umfasst.

Gemäß einer weiteren bevorzugten Ausführungsform ist die längenveränderliche Linearführung durch eine antreibbare Kolbenzylindereinheit gebildet.

Gemäß einer weiteren bevorzugten Ausführungsform erstreckt sich der Hebel oder die Führung stangenförmig in einer senkrecht zur axialen Richtung der Walze betrachteten Ebene zu der ersten Hälfte der Kühlschale und vorzugsweise zu dem an dieser Hälfte liegenden Ende der Kühlschale. Stangenförmig ist allerdings nicht derart einschränkend zu verstehen, dass lediglich gerade Verläufe möglich sind, die Hebel können vielmehr auch Knicke oder Krümmungen aufweisen, sollen allerdings bevorzugt starr sein bzw. in ihrer Geometrie definiert. Es können auch parallel zur axialen Richtung der Walze mehrere Hebel oder Führungen vorgesehen werden, sodass in einer solchen Richtung mehrere Hebel oder Führungen angeordnet sind. Alternativ erstreckt sich der Hebel im Wesentlichen plattenförmig in einer parallel zur axialen Richtung der Walze liegenden Ebene. Wiederum muss es sich allerdings nicht um eine ebene bzw. gerade Form handeln, auch Knicke oder Krümmungen der Platte sind möglich, solange die Geometrie der Platte definiert bzw. bekannt ist.

Die Kühlschale ist ebenfalls bevorzugt entlang der Umfangsrichtung der Walze starr und/oder gelenkfrei ausgebildet und erstreckt sich parallel zur axialen Richtung der Walze zumindest teilweise über die Walze bzw. die Walzenbreite. Wird in den Spalt zwischen der Kühlschale und der Walzenoberfläche Kühlmedium mittels einer Düse eingeleitet, kann diese parallel zur axialen Richtung der Walze eine Reihe von mehreren Düsen umfassen oder in dieser Richtung schlitzartig ausgebildet sein.

Die Kühlschale an sich besteht vorzugsweise lediglich aus einem starren bzw. inelastischen / nichtfalt- oder nichtknickbaren Teil. Gleichermaßen ist der Hebel im Wesentlichen bevorzugt starr ausgebildet. Die Lagerung des Hebels und der Linearführung kann zum Beispiel an einem gemeinsamen oder verschiedenen Aufhängungspunkten erfolgen. Diese Punkte können bereits auf in einer Walzanlage bzw. einem Walzwerk vorhandenen Elementen befinden und sind daher nicht zwingend Teil der offenbarten Kühlvorrichtung.

Gemäß einer weiteren bevorzugten Ausführungsform der Vorrichtung, umfasst die Vorrichtung einen Abstreifer zum Abstreifen von aus dem Kühlspalt an einem Ende der Kühlschale austretendem Kühlfluid, wobei der Abstreifer sich vorzugsweise plattenförmig von der Oberfläche der Walze weg erstreckt, um die aus dem Kühlspalt austretende Kühlmittelströmung von der Walze weggerichtet abzuleiten. Ein solcher Abstreifer hat insbesondere gegenüber einem geschlossenen Auffangkasten den Vorteil, dass die aus dem Kühlspalt austretende Kühlmittelströmung nicht wesentlich gestört wird, sondern lediglich abgelenkt wird. Es werden insbesondere keine Querströmungen in dem Kühlspalt durch den Aufstau in einem geschlossenen Kasten hervorgerufen, welche einer gleichmäßigen Kühlwirkung des Kühlmittels auf die Walzenoberfläche erheblich entgegenwirken.

Ferner ist die Erfindung auf eine Kühleinrichtung gerichtet, welche eine Vorrichtung gemäß einer der vorhergehenden Ausführungsformen umfasst, wobei die Einrichtung einen im Wesentlichen horizontal und unabhängig von der Position der Walze verfahrbaren Tragrahmen umfasst, durch den die Antriebseinheiten, der Hebel und/oder die Linearführung getragen werden. Mit anderen Worten sind die Aufhängungspunkte auf dem Tragrahmen positioniert. Das bedeutet, dass die Kühlschale unabhängig von dem Walzenständer oder den Walzeneinbaustücken montier- und/oder verfahrbar ist. Dies erleichtert den Wechsel der Walze erheblich und vermeidet eine langwierige Montage und Demontage der Kühlvorrichtung beim Walzenwechsel. Optional sind die Antriebseinheiten, der Hebel und/oder die Linearführung drehbar an dem Tragrahmen gelagert.

Im Allgemeineren sind die Aufhängungspunkte bevorzugt relativ zueinander ortsfest.

Gemäß einer bevorzugten Ausführungsform der Kühleinrichtung, umfasst diese ferner eine Arbeitswalze, wobei die Kühlschale durch Verfahren des Tragrahmens und/oder die Antriebseinheiten an die Walzenoberfläche anstellbar ist.

Schließlich richtet sich die vorliegende Erfindung auf ein Verfahren zur Verwendung der genannten Vorrichtung oder der zuvor beschriebenen Einrichtung. Das Verfahren umfasst bevorzugt einen oder mehrere der folgenden Schritte: Bereitstellen einer Arbeitswalze; Bestimmen des Durchmessers der Arbeitswalze; Einbauen der Arbeitswalze in ein Walzgerüst; Annähern der Kühlvorrichtung an die Walzenoberfläche, vorzugsweise mittels des verfahrbaren Tragrahmens; Kontaktieren der Walzenoberfläche durch die Kühlschale, insbesondere durch deren Elemente und/oder durch Schwenken des Hebels in Richtung der Walzenoberfläche; Berechnen der Position der Arbeitswalze; Abheben der Kühlschale durch Wegschwenken des Hebels von der Walzenoberfläche und wahlweise durch Antrieb der Linearführung und/oder Beaufschlagung des Spalts mit Kühlmitteldruck; Leiten von Kühlflüssigkeit in den Kühlspalt; Einstellen des Abstands der Kühlschale von der Walzenoberfläche durch Schwenken des Hebels und wahlweise durch Einstellen des Kühlmediumdrucks oder Antrieb der Linearführung; Starten eines Walzvorgangs durch die Arbeitswalze; Stoppen des Walzvorgangs; Vergrößern des Kühlspalts durch Schwenken des Hebels und/oder durch Verfahren der Vorrichtung mittels des Tragrahmens; und Ausbau der Arbeitswalze aus dem Walzgerüst. Dabei können die Schritte zumindest teilweise ebenfalls in anderer Reihenfolge ausgeführt werden.

Sämtliche Merkmale der oben beschriebenen Ausführungsformen können miteinander kombiniert oder gegeneinander ausgetauscht werden.

### Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:
- Figur 1: einen schematischen Querschnitt durch ein erfindungsgemäßes Ausführungsbeispiel einer an eine Walze angestellten Kühlvorrichtung;
- Figur 2: einen schematischen Querschnitt durch ein weiteres erfindungsgemäßes Ausführungsbeispiel einer an eine Walze angestellten Kühlvorrichtung; und
- Figur 3: eine Kühleinrichtung umfassend eine Kühlvorrichtung gemäß der Figur 1.

### Detaillierte Beschreibung der Ausführungsbeispiele

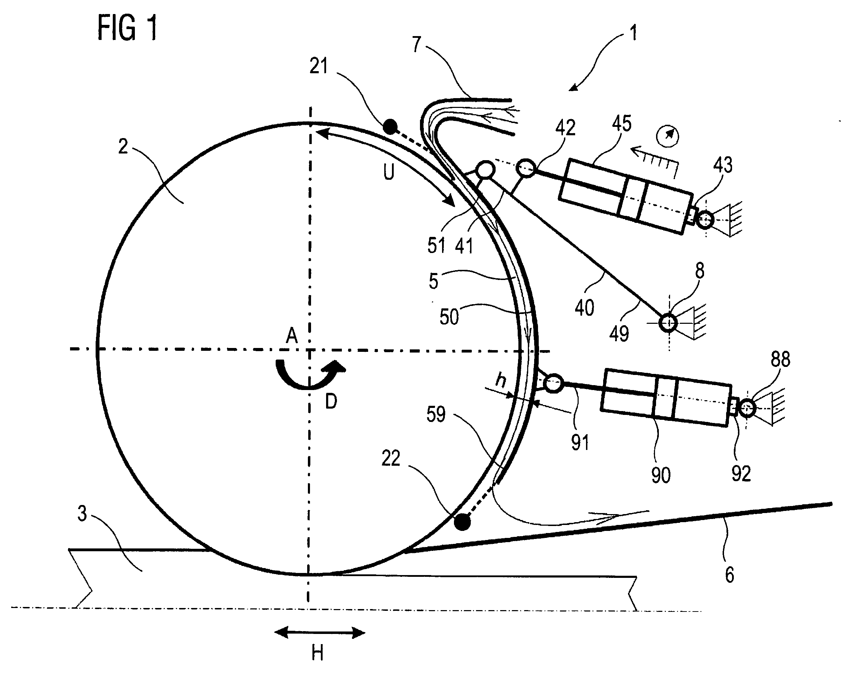

Die Figur 1 offenbart ein erfindungsgemäßes Ausführungsbeispiel einer Kühlvorrichtung 1. Diese Kühlvorrichtung 1 umfasst eine Kühlschale 50, welche sich zumindest über einen Teilbereich der Walzenoberfläche in Umfangsrichtung U der Walze 2 erstreckt. Die Längsachse bzw. Drehachse der Walze 2 erstreckt sich dabei bevorzugt in axialer Richtung A und ist um die Walzenachse, insbesondere in der Drehrichtung D drehbar. Wie in der Figur 1 dargestellt, befindet sich die Kühlvorrichtung 1 bevorzugt auf der Auslaufseite der Walze 2 zum Walzen eines Metallbandes 3, kann sich allerdings ebenfalls auf der gegenüberliegenden Einlaufseite befinden. Die Walze 2 stellt dabei bevorzugt eine Arbeitswalze 2 in einem Walzgerüst einer Walzstraße dar (nicht abgebildet). Über eine Düse 7 kann Kühlfluid, vorzugsweise eine Flüssigkeit, wie zum Beispiel Wasser, in den zwischen der Kühlschale 50 und der Walzenoberfläche gebildeten Kühlspalt 5 eingeleitet werden. Diese Düse 7 kann wie dargestellt bevorzugt an einem oberen Ende der Kühlschale 50 angeordnet und vorzugsweise mit dieser verbunden sein, sodass durch die Düse 7 in den Kühlspalt 5 eingeleitetes Kühlmittel den Kühlspalt 5 am unteren Ende wieder verlässt. Dabei verlässt der Fluidstrom den Kühlspalt 5 vorzugsweise barrierefrei. Insbesondere wird er nicht durch einen Wasserkasten eingeengt, welcher zu Turbulenzen oder Querströmungen führen könnte, die sich sogar bis in den Spalt 5 zurückerstrecken könnten. Es ist lediglich, wie dargestellt optional vorgesehen, dass ein Abstreifer 6 den Walzenumfang bzw. die Walzenoberfläche stromabwärts des Spalts 5 kontaktiert, um Wasser von der Walzenoberfläche und vom Metallband 3 wegzuleiten. Solch ein Abstreifer 6 kann vorzugsweise durch eine Metall-, Kunststoff- oder Holzplatte gebildet sein.

Die Anstellung der Kühlschale 50 an die Walzenoberfläche kann mittels einer Anordnung eines Hebels 40 und einer schwenkbaren Linearführung 90 erfolgen, wobei der Hebel durch eine Antriebseinheit 45 schwenkbar ist. Durch die Kühlvorrichtung 1 ist somit eine Verstellbarkeit der Spalthöhe h des Kühlspalts 5 zwischen der Oberfläche bzw. dem Umfang der Walze 2 und der Kühlschale 50 möglich. Mit anderen Worten ist der Abstand h zwischen Kühlschale 50 und der Walze 2 verstellbar bzw. einstellbar.

An ihrem oberen Ende bzw. ihrem Endbereich 51 ist die Kühlschale 50 mit einem ersten Endbereich 41 des Hebels 40 verbunden. Der Hebel 40 ist ferner an einem zweiten Ende 49 schwenkbar an einem Lager 8 gelagert. Dabei kann die Schwenkrichtung in einer senkrecht zur Walzenachse A liegenden Ebene liegen. Bevorzugt ist der Hebel 40 an seinem ersten Endbereich 41 drehbar mit der oberen Hälfte 51 der Kühlschale verbunden. Eine längenveränderbare Linearführung 90 ist ebenfalls schwenkbar an einer ihrer Enden 92 an einem Aufhängungspunkt 88 schwenkbar gelagert, wobei ein erster Endbereich 91 der Linearführung 90 mit einer unteren Hälfte 59 der Kühlschale 50 drehbar verbunden ist.

Die Aufhängungspunkte bzw. die Lagerungspunkte oder Schwenkpunkte 8, 88 des Hebels 40 und der längenveränderlichen Linearführung 90 können dabei auch in einem gemeinsamen Punkt liegen. Dieser Punkt kann zum Beispiel gegenüber der Seite der Kühlschale 50 liegen, welche von der Oberfläche der Walze 2 abgewandt ist. Der Hebel 40 ist durch eine Antriebseinheit 45 antreibbar bzw. schwenkbar. Dazu greift die Antriebseinheit 45 bevorzugt an einem Endbereich 41 des Hebels 40 an. Wie in der Figur 1 dargestellt, ist es möglich, dass die Antriebseinheit 45 durch eine Kolbenzylindereinheit 45 gebildet ist. Eine solche Kolbenzylindereinheit 45 kann mit einem ihrer Enden 43 schwenkbar an einem Aufhängungspunkt gelagert sein. Die Schwenkrichtung kann wiederum in einer Ebene liegen, welche senkrecht zur axialen Richtung A der Walze 2 steht. Die vorliegende Erfindung ist allerdings nicht auf Kolbenzylindereinheiten als Antriebseinheiten beschränkt, vielmehr können ebenso andere Antriebsarten, wie pneumatische Antriebe oder elektrische bzw. elektromechanische Antriebe Verwendung finden. Antriebseinheiten können im Allgemeinen über Weggeber verfügen, durch die auf die Orientierung des Hebels 40, geschlossen werden kann. Insbesondere kann auch die Linearführung 90 einen Antrieb aufweisen und vorzugsweise durch eine Kolbenzylindereinheit 90 gebildet sein. Alternativ oder zusätzlich können Winkelmessungen erfolgen, welche den Schwenkwinkel des Hebels 40 und/oder der schwenkbaren Linearführung 90 bestimmen. Eine solche Messung kann bevorzugt jeweils am Schwenkpunkt 8, 88. erfolgen. Ferner können im Fall der Verwendung von Kolbenzylindereinheiten 45, 90, diese Einheiten mit Druckgebern ausgerüstet sein, sodass zum Beispiel ein Kontakt der Kühlschale 50 mit der Walzenoberfläche feststellbar ist. Alternativ kann im Fall der Verwendung von Elektromotoren der aufgenommene Strom überwacht werden, um einen Widerstand bei Kontaktierung der Kühlschale 50 mit der Walzenoberfläche festzustellen.

Die Kühlschale 50 umfasst ferner in Umfangsrichtung betrachtet an ihren beiden Enden Elemente 21, 22 zur Kontaktierung der Walzenoberfläche. Diese Elemente 21, 22 sind mit einer gestrichelten Verbindung zur Kühlschale 50 dargestellt, da sie nicht im Bereich des Kühlmittelstroms liegen. Mit anderen Worten erstrecken sie sich von den Enden der Kühlschale 50 weg. An diesen Enden kann somit bevorzugt jeweils eine, vorzugsweise drehbare Rolle 21, 22 angeordnet sein, deren Drehachse im Wesentlichen parallel zu der Drehachse A der Walze 2 liegt. Alternativ könnte eine Gleitleiste (nicht abgebildet) an den Enden der Kühlschale 50 angeordnet sein. Dabei können die Elemente 21, 22 derart ausgebildet und angeordnet sein, dass sie die Walzenoberfläche in Umfangsrichtung U betrachtet einerseits oberhalb des oberen Endes der Kühlschale 50 kontaktieren und andererseits unterhalb des unteren Endes der Kühlschale 50 kontaktieren. Der Kontakt ist vorzugsweise lediglich über die Oberfläche der an den Kühlschalenenden angeordneten Elemente 21, 22 herstellbar. Ist der Durchmesser der Walze 2 bekannt, so ist bei Kontakt der Elemente 21, 22 mit der Walzenoberfläche ebenfalls deren Position in einer senkrecht zur axialen Richtung A stehenden Ebene gegeben. Die Position der Aufhängungspunke 8, 88 wird ebenfalls bevorzugt nicht oder nur definiert verändert. Die Positionen der Antriebseinheit 45 bzw. von deren Aufhängungspunkt und den Aufhängungspunkten 8, 88 sind relativ zueinander festgelegt bzw. fix.

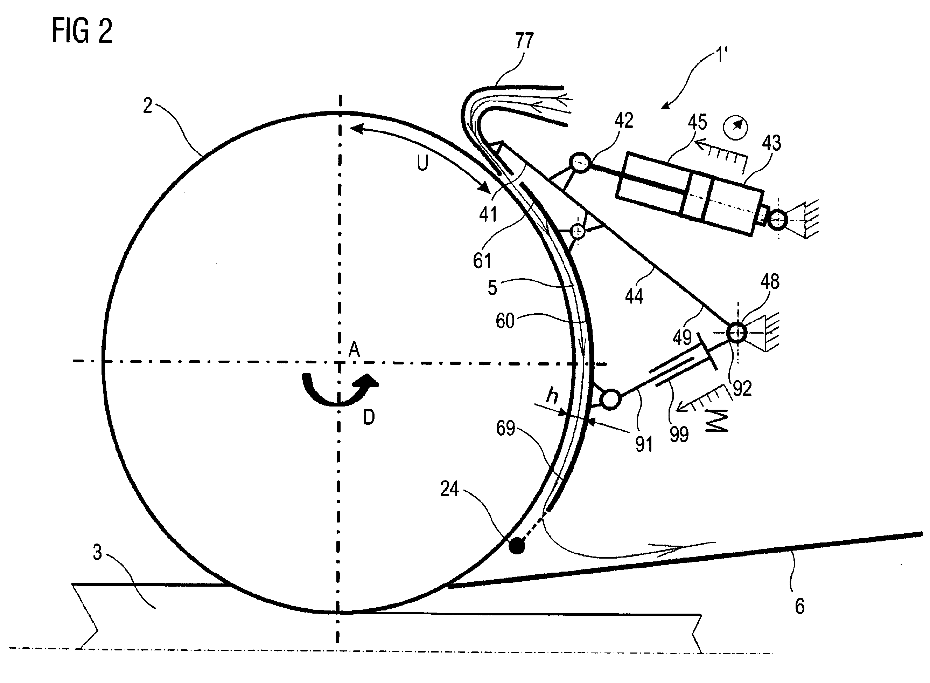

Die Figur 2 zeigt eine Anordnung gemäß einem weiteren Ausführungsbeispiel der Erfindung. Einige Elemente mit identischer Funktion wurden mit gleichen Bezugszeichen wie in Figur 1' dargestellt. Die Kühlvorrichtung 1' umfasst einen Hebel 44 welcher schwenkbar bzw. drehbar an einem Aufhängungspunkt 48 gelagert ist und drehbar mit einer in Umfangsrichtung betrachtet ersten Hälfte 61 der Kühlschale 60 verbunden ist. Der Hebel 44 kann über einen Antrieb durch die Kolbenzylindereinheit 45 in Richtung der Walzenoberfläche geschwenkt werden, wodurch ebenfalls der Abstand der Kühlschale 60 von der Walzenoberfläche einstellbar ist bzw. die Spalthöhe h regulierbar ist. Im Gegensatz zu dem Ausführungsbeispiel der Figur 1 ist eine Düse 77 zur Einleitung von Kühlmedium in den Spalt 5 nicht unmittelbar bzw. direkt mit der Kühlschale 60 verbunden sondern an einem dem Aufhängungspunkt 48 gegenüberliegenden Ende des Hebels 44 befestigt. Dennoch leitet die Düse 77 bevorzugt einen Kühlmittelstrom möglichst tangential zur Walzenoberfläche in den Spalt 5 ein.

Ein weiterer Unterschied zu dem vorher beschriebenen Ausführungsbeispiel besteht darin, dass die längenveränderliche Linearführung 99 nicht antreibbar ausgebildet ist, das heißt, insbesondere nicht durch eine Kolbenzylindereinheit gebildet ist. Vielmehr handelt es sich bei der dargestellten Linearführung 99 zum Beispiel um ein Schubgelenk, welches einerseits drehbar bzw. schwenkbar an einem ersten Ende 92 mit dem Aufhängungspunkt 48 verbunden ist und andererseits drehbar an einem zweiten Ende 91 mit der in Umfangsrichtung betrachtet zweiten Hälfte 69 der Kühlschale 60 verbunden ist. Jedoch kann auch diese Linearführung 99 mit Wegmessern oder Druckmessern ausgestattet sein.
Die Kühlschale der Vorrichtung 1' ist lediglich explizit mit einem Element 24 zur Kontaktierung der Walzenoberfläche dargestellt, welches dem Element 22 aus der Figur 1 entspricht. Die Vorrichtung 1' umfasst allerdings ebenfalls ein Element, dass dem Element 21 entspricht, dieses wurde lediglich aus Gründen der Deutlichkeit der Figur nicht dargestellt. Die an beiden Enden der Kühlschale 60 befestigten Elemente 24 sind dabei wie zuvor beschrieben nicht störend im Fluidstrom angeordnet, sondern befinden sich in axialer Richtung betrachtet vorzugsweise neben der Kühlschale 60.

Die Spalthöhe h in der ersten bzw. oberen Hälfte 61 der Kühlschale 60 kann bevorzugt durch die Anstellung des Hebels 44 eingestellt werden, während die Spalthöhe in der zweiten oder unteren Hälfte 69 der Kühlschale 60 über den Druck des in den Spalt geführten Kühlmediums einstellbar ist, wobei sich die Linearführung 99 entsprechend des Kühlmediumdrucks verlängert oder verkürzt. In Abwesenheit von Kühlmitteldruck kontaktiert die Kühlschale 60 vorzugsweise mit dem Element 24 die Walzenoberfläche.

Optional kann ein Wegbegrenzer für die Linearführung 99 vorgesehen sein, welcher zumindest im Walzbetrieb verhindert, dass die Führung 99 soweit ausgezogen wird, dass die Kühlschale 60 in Kontakt mit der Walzenoberfläche gelangt.

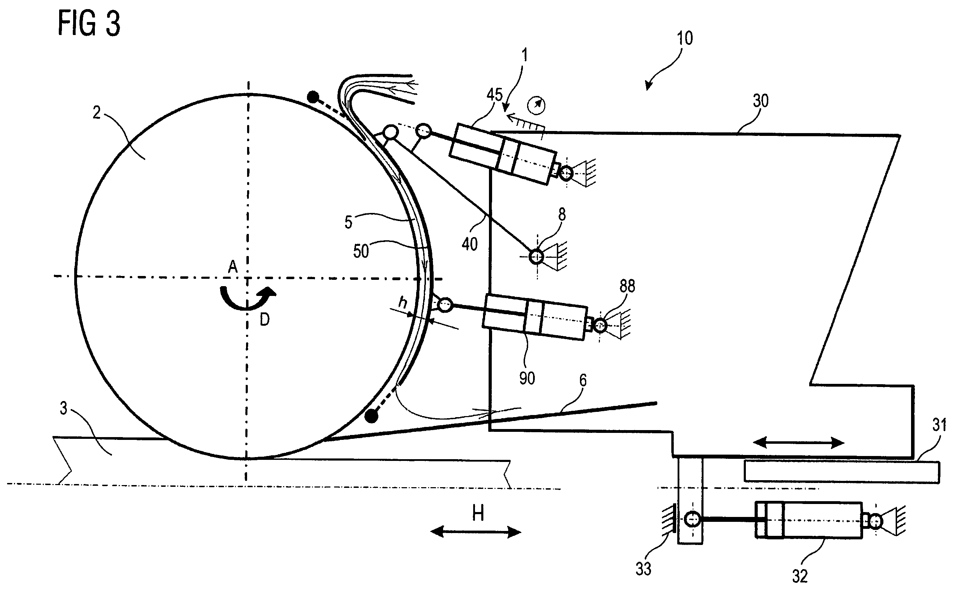

Die Figur 3 offenbart eine Kühleinrichtung 10, welche eine Kühlvorrichtung 1 gemäß der Figur 1 umfasst. Die Kühleinrichtung 10 umfasst einen verfahrbaren Tragrahmen 30, an dem sich die Aufhängungspunkte 8, 88 des Hebels 40 und der Linearführung 90 befinden. Ferner ist bevorzugt ebenfalls die Antriebseinheit 45 des Hebels 40, insbesondere schwenkbar, an einem Aufhängungspunkt an dem Tragrahmen 30 gelagert. Die Punkte 8, 88 sind vorzugsweise relativ zueinander ortsfest. Der Tragrahmen 30 ist vorzugsweise horizontal verschiebbar ausgebildet, sodass er im Wesentlichen in horizontaler Richtung H und in Richtung der zu kühlenden Walze 2 oder entgegengesetzt zu dieser Richtung verfahrbar ist. Zum Beispiel kann der Tragrahmen 30 auf einer Gleitleiste 31 gelagert sein. Alternativ sind zum Beispiel auch Rollen möglich. Die Verstellung kann mittels eines Antriebs 32 erfolgen, zum Beispiel durch einen hydraulischen oder elektrischen Antrieb. Ferner kann die Einrichtung 10 über einen Anschlag 33 verfügen, welcher eine Kollision der Kühlschale 5 mit der Walze 2 durch Verfahren des Tragrahmens 30 verhindert.

Falls gewünscht, können mehrere der oben beschriebenen Vorrichtungen 1, 1' bzw. Einrichtungen 10 an eine Walze 2 angestellt werden, zum Beispiel ein- und auslaufseitig einer Walze 2 bzw. eines Walzgerüsts.

Ferner wurden die Hebel 40, 44 und die Linearführungen 90, 91 in Bezug auf die Anordnung in den Figuren 1 bis 3 beschrieben. Der Hebel 40, 44 kann allerdings ebenfalls der Linearführung 90, 99 getauscht werden, sodass die Linearführung 90, 99 mit der Kühlschale 50, 60 an deren oberen Hälfte 51, 61 verbunden ist und der Hebel 40, 44 drehbar mit der unteren Hälfte 59, 69 der Kühlschale 50, 60 verbunden ist.

Die oben beschriebenen Ausführungsbeispiele dienen vor allem dem besseren Verständnis der Erfindung und sollten nicht einschränkend verstanden werden. Der Schutzumfang der vorliegenden Patentanmeldung ergibt sich aus den Patentansprüchen.

Die Merkmale der beschriebenen Ausführungsbeispiele können miteinander kombiniert oder gegeneinander ausgetauscht werden.

Ferner können die beschriebenen Merkmale durch den Fachmann an vorhandene Gegebenheiten oder vorliegende Anforderungen angepasst werden.

### Bezugszeichenliste

- 1: Kühlvorrichtung
- 1': Kühlvorrichtung
- 2: Walze / Arbeitswalze
- 3: Metallband / Walzgut
- 5: Kühlspalt
- 6: Abstreifer
- 7: Düse
- 8: Aufhängungspunkt
- 10: Kühleinrichtung
- 21: Element zur Kontaktierung der Walzenoberfläche
- 22: Element zur Kontaktierung der Walzenoberfläche
- 24: Element zur Kontaktierung der Walzenoberfläche
- 30: Tragrahmen
- 31: Führungsmittel
- 32: Antriebseinheit / Kolbenzylindereinheit
- 33: Anschlag
- 40: Hebel
- 41: erster Endbereich des Hebels
- 42: erster Endbereich der Antriebseinheit
- 43: zweiter Endbereich der Antriebseinheit
- 44: Hebel
- 45: Antriebseinheit / Kolbenzylindereinheit
- 48: Aufhängungspunkt
- 49: zweiter Endbereich des Hebels
- 50: Kühlschale
- 51: in Umfangsrichtung der Walze betrachtet, erste Hälfte der Kühlschale
- 59: in Umfangsrichtung der Walze betrachtet, zweite Hälfte der Kühlschale
- 60: Kühlschale
- 61: in Umfangsrichtung der Walze betrachtet, erste Hälfte der Kühlschale
- 69: in Umfangsrichtung der Walze betrachtet, zweite Hälfte der Kühlschale
- 77: Düse
- 88: Aufhängungspunkt
- 90: Linearführung / Kolbenzylindereinheit
- 91: erster Endbereich der Linearführung
- 92: zweiter Endbereich der Linearführung
- 99: Linearführung / Schubgelenk
- A: Walzenachse
- D: Drehrichtung der Walze
- h: Höhe des Kühlspalts / Abstand zwischen Kühlschale und Walzenoberfläche
- H: horizontale Richtung
- U: Umfangsrichtung der Walze / zur Walzenoberfläche parallele Richtung

## Patentansprüche

1. Vorrichtung (1, 1') zum Kühlen einer Walze (2), insbesondere einer Arbeitswalze (2) zum Walzen von Walzgut (3), umfassend:
eine zumindest einem Teilbereich des Umfangs der Walzenoberfläche gegenüberliegende Kühlschale (50, 60) zum Bilden eines mit Kühlfluid durchströmbaren Kühlspalts (5) zwischen dem Teilbereich der Walzenoberfläche und der Kühlschale (50, 60),
**dadurch gekennzeichnet, dass** die Vorrichtung (1, 1') weiterhin Folgendes umfasst:
einen um einen ersten Aufhängungspunkt (8, 48) schwenkbaren Hebel (40, 44), welcher in Richtung der Walzenoberfläche schwenkbar ist und mit einer, in Umfangsrichtung (U) der Walze (2) betrachtet, ersten Hälfte (51, 61) der Kühlschale (50, 60) drehbar verbunden ist, wobei der Kühlspalt (5) durch Schwenken des Hebels (40, 44) wahlweise verringerbar oder vergrößerbar ist; und
eine um einen zweiten Aufhängungspunkt (88, 48) schwenkbare längenveränderliche Linearführung (90, 99), welche mit der, in Umfangsrichtung (U) der Walze (2) betrachtet, zweiten Hälfte (59, 69) der Kühlschale (50, 60) drehbar verbunden ist.

2. Die Vorrichtung gemäß Anspruch 1, wobei die Aufhängungspunkte (8, 48, 88) gegenüberliegend der von der Walzenoberfläche abgewandten Seite der Kühlschale (50, 60) angeordnet sind.

3. Die Vorrichtung gemäß Anspruch 1 oder 2, wobei eine sich jeweils durch die Aufhängungspunkte (8, 48, 88) erstreckende Schwenkachse sich im Wesentlichen parallel zur Walzenachse (A) erstreckt und die beiden Aufhängungspunkte (8, 48, 88) vorzugsweise zusammenfallen.

4. Die Vorrichtung gemäß einem der vorhergehenden Ansprüche, wobei die Vorrichtung weiterhin eine Düse (7, 77) zum Einleiten von Kühlmedium, vorzugsweise von Kühlflüssigkeit, in den Spalt (5) umfasst und zum im Wesentlichen tangentialen Einleiten des Kühlmediums, insbesondere entgegen der Drehrichtung (D) der Walze (2), in den Spalt (5) ausgebildet ist und, in Umfangsrichtung (U) betrachtet, an einem Ende der Kühlschale (50, 60) angeordnet ist.

5. Die Vorrichtung gemäß einem der vorhergehenden Ansprüche, weiterhin umfassend:
eine Antriebseinheit (45) zum Schwenken des Hebels (40, 44) um den ersten Aufhängungspunkt (8, 48).

6. Die Vorrichtung gemäß Anspruch 5, wobei die Antriebseinheit (45, 46) eine Kolbenzylindereinheit (45) umfasst, welche bevorzugt an einem ihrer Enden (42) drehbar mit der ersten Hälfte (51, 61) des Hebels (40, 44) zum Schwenken des Hebels (40, 44) verbunden und an ihrem zweiten Ende (43) drehbar gelagert ist.

7. Die Vorrichtung gemäß einem der vorhergehenden Ansprüche, wobei
der Hebel (40, 44) einen ersten Endbereich (41) und einen zweiten Endbereich (49) aufweist, und der erste Endbereich (41) drehbar mit der, in Umfangsrichtung (U) der Walze (2) betrachtet, ersten Hälfte (51, 61) der Kühlschale (50, 60) verbunden ist und dessen zweiter Endbereich (49) schwenkbar an dem ersten Aufhängungspunkt (8, 48) lagerbar ist; und
die längenveränderliche Linearführung (90, 99) einen ersten Endbereich (91) und einen zweiten Endbereich (92) umfasst, wobei deren erster Endbereich (91) drehbar mit der in Umfangsrichtung (U) der Walze betrachtet zweiten Hälfte (59, 69) der Kühlschale (50, 60) verbunden ist und deren zweiter Endbereich (92) schwenkbar an dem weiteren Aufhängungspunkt (48, 88) lagerbar ist.

8. Die Vorrichtung gemäß einem der vorhergehenden Ansprüche, wobei die Kühlschale (50, 60) an ihrer ersten Hälfte (51, 61) ein erstes Element (21) zur Kontaktierung der Walzenoberfläche umfasst und an ihrer zweiten Hälfte (59, 69) ein zweites Element (22, 24) zur Kontaktierung der Walzenoberfläche umfasst; und wobei - optional -
die Elemente (21, 22, 24) je eine drehbare Rolle (21, 22, 24) oder einen Gleitstein zur Kontaktierung der Walzenoberfläche umfassen.

9. Die Vorrichtung gemäß Anspruch 8, wobei das erste Element (21) in Umfangsrichtung (U) der Walze (2) betrachtet die Walzenoberfläche vor der ersten Hälfte (51, 61) der Kühlschale (50, 60) kontaktiert und das zweite Element (22, 24) in Umfangsrichtung (U) der Walze (2) betrachtet die Walzenoberfläche hinter der zweiten Hälfte (59, 59) der Kühlschale (50, 60) kontaktiert.

10. Die Vorrichtung gemäß einem der vorhergehenden Ansprüche, wobei der Hebel (40, 44) und die Linearführung (90, 99) jeweils derart um ihren jeweiligen Aufhängungspunkt (8, 48, 88) schwenkbar angeordnet sind, dass durch Schwenken des Hebels (40, 44) sowie durch Schwenken und/oder eine Längenveränderung der Linearführung (90, 99) die Elemente (21, 22, 24) mit der Walzenoberfläche in Kontakt bringbar und wieder von dieser abhebbar sind.

11. Die Vorrichtung gemäß einem der Ansprüche 8 bis 10, wobei die Vorrichtung weiterhin ein Auswertungssystem zur Bestimmung der Höhe des Kühlspalts (5) umfasst, welches bei Kontaktierung der Elemente mit der Walzenoberfläche und nach Maßgabe der bekannten Geometrie und/oder der Anordnung des Hebels, der Linearführung, der Kühlschale (50), der Aufhängungspunkte (8) und des Durchmessers der Walze (2) zur Berechnung der Position der Walze (2) ausgebildet ist.

12. Die Vorrichtung gemäß einem der vorhergehenden Ansprüche, wobei die längenveränderliche Linearführung (90, 99) durch ein Schubgelenk gebildet ist, welches vorzugsweise einen Zylinder und einen in dem Zylinder geführten Kolben umfasst.

13. Die Vorrichtung gemäß einem der vorhergehenden Ansprüche, wobei die längenveränderliche Linearführung (90) durch eine antreibbare Kolbenzylindereinheit gebildet ist.

14. Die Vorrichtung gemäß einem der vorhergehenden Ansprüche, wobei sich der Hebel (40, 44) stangenförmig in einer senkrecht zur axialen Richtung (A) der Walze (2) betrachteten Ebene zu der ersten Hälfte (51, 61) und vorzugsweise zu dem an dieser Hälfte (51, 61) liegenden Ende der Kühlschale (50, 60) erstreckt; oder
sich im Wesentlichen plattenförmig in einer parallel zur axialen Richtung (A) der Walze (2) liegenden Ebene erstreckt.

15. Die Vorrichtung gemäß einem der vorhergehenden Ansprüche, weiterhin umfassend einen Abstreifer (6) zum Abstreifen von aus dem Kühlspalt (5) an einem Ende (59, 69) der Kühlschale austretenden Kühlfluid, wobei der Abstreifer (6) sich vorzugsweise plattenförmig von der Oberfläche der Walze (2) weg erstreckt, um eine aus dem Kühlspalt (5) austretende Kühlmittelströmung von der Walze (2) weggerichtet abzuleiten.

16. Eine Kühleinrichtung (10), umfassend die Vorrichtung (1, 1') gemäß einem der vorhergehenden Ansprüche, wobei die Einrichtung (10) einen im Wesentlichen horizontal und unabhängig von der Position der Walze (2) verfahrbaren Tragrahmen (30) umfasst, durch den der Hebel (40, 44), dessen Antriebseinheit (45) und die Linearführung (90, 99) getragen werden.

17. Verfahren zur Verwendung der Vorrichtung (1,1') gemäß einem der Ansprüche 1 bis 15 oder der Einrichtung (10) gemäß Anspruch 16, umfassend einen oder mehrere der folgenden Schritte:
Bereitstellen einer Arbeitswalze (2);
Bestimmen des Durchmessers der Arbeitswalze (2);
Einbauen der Arbeitswalze (2) in ein Walzgerüst;
Annähern der Kühlvorrichtung (1, 1') an die Walzenoberfläche, vorzugsweise mittels des verfahrbaren Tragrahmens (30) gemäß Anspruch 16;
Kontaktieren der Walzenoberfläche durch die Kühlschale (50, 60),
insbesondere durch deren Elemente (21, 22, 24) bei Schwenken des Hebels (40, 44) in Richtung der Walzenoberfläche;
Berechnen der Position der Arbeitswalze (2);
Abheben der Kühlschale (50, 60) durch Wegschwenken des Hebels (40, 44) von der Walzenoberfläche;
Leiten von Kühlflüssigkeit in den Kühlspalt (5);
Einstellen des Abstands (h) der Kühlschale (50, 60) von der Walzenoberfläche durch Schwenken des Hebels (40, 44) und wahlweise durch Einstellen des Kühlmediumdrucks oder des Verfahrwegs einer an der zweiten Hälfte der Kühlschale (60) befestigten Kolbenzylindereinheit (90);
Starten eines Walzvorgangs durch die Arbeitswalze (2);
Stoppen des Walzvorgangs;
Vergrößern des Kühlspalts (5) durch Schwenken des Hebels (40, 44) und/oder durch Verfahren der Vorrichtung (1, 1') mittels des Tragrahmens (30) gemäß Anspruch 16; und
Ausbau der Arbeitswalze (2) aus dem Walzgerüst.

## Claims

1. Device (1, 1') for cooling a roll (2), particularly a work roll (2) for the rolling of rolling stock (3), comprising:
a cooling shell (50, 60) which is opposite at least a sub-region of the circumference of the roll surface, for forming a cooling gap (5), which can be flowed through by a cooling fluid, between the sub-region of the roll surface and the cooling shell (50, 60),
**characterised in that** the device (1, 1') further comprises the following:
a lever (40, 44), which is pivotable about a first suspension point (8, 48) in the direction of the roll surface and is rotatably connected with a first half (51, 61), as considered in the circumferential direction (U) of the roll (2), of the cooling shell (50, 60), wherein the cooling gap (5) can be selectably decreased or increased by pivotation of the lever (40, 44);
and
a length-variable linear guide (90, 99), which is pivotable about a second suspension point (88, 48) and which is rotatably connected with the second half (59, 69), as considered in the circumferential direction (U) of the roll (2), of the cooling shell (50, 60).

2. The device according to claim 1, wherein the suspension points (8, 48, 88) are arranged opposite the side of the cooling shell (50, 60) remote from the roll surface.

3. The device according to claim 1 or 2, wherein a pivot axis extending through each of the suspension points (8, 48, 88) extends substantially parallel to the roll axis (A) and preferably coincides with the two suspension points (8, 48, 88).

4. The device according to any one of the preceding claims, wherein the device further comprises a nozzle (7, 77) for introducing cooling medium, preferably a cooling liquid, into the gap (5) and is constructed for substantially tangential introduction, particularly counter to the rotational direction (D) of the roll (2), of the cooling medium into the gap (5) and is arranged at an end of the cooling shell (50, 60) as considered in circumferential direction (U).

5. The device according to any one of the preceding claims, further comprising:
a drive unit (45) for pivoting the lever (40, 44) about the first suspension point (8, 48).

6. The device according to claim 5, wherein the drive unit (45, 46) comprises a piston-cylinder unit (45) which is rotatably connected, preferably at one of its ends (42), with the first half (51, 61) of the lever (40, 44) for pivotation of the lever (40, 44) and is rotatably mounted at its second end (43).

7. The device according to any one of the preceding claims, wherein the lever (40, 44) has a first end region (41) and a second end region (49), and the first end region (41) is rotatably connected with the first half (51, 61), as considered in the circumferential direction (U) of the roll (2), of the cooling shell (50, 60) and the second end region (49) thereof can be pivotably mounted at the first suspension point (8, 48); and the length-variable linear guide (90, 99) has a first end region (91) and a second end region (92), wherein the first end region (91) thereof is rotatably connected with the second half (59, 69), as considered in the circumferential direction (U) of the roll, of the cooling shell (50, 60) and the second end region (92) thereof can be pivotably mounted at the further suspension point (48, 88).

8. The device according to any one of the preceding claims, wherein the cooling shell (50, 60) has at the first half (51, 61) thereof a first element (21) for contacting the roll surface and at the second half (59, 69) thereof a second element (22, 24) for contacting the roll surface; and wherein the elements (21, 22, 24) optionally each comprise a rotatable roller (21, 22, 24) or a slide block for contacting the roll surface.

9. The device according to claim 8, wherein the first element (21) contacts the roll surface in front of the first half (51, 61) of the cooling shell (50, 60) as considered in circumferential direction (U) of the roll (2) and the second element (22, 24) contacts the roll surface behind the second half (59, 59) of the cooling shell (50, 60) as considered in circumferential direction (U) of the roll (2).

10. The device according to any one of the preceding claims, wherein the lever (40, 44) and the linear guide (90, 99) are each so arranged to be pivotable about the respective suspension point (8, 48, 88) thereof that through pivotation of the lever (40, 44) as well as through pivotation and/or change in length of the linear guide (90, 99) the elements (21, 22, 24) can be brought into contact with the roll surface and lifted off again therefrom.

11. The device according to any one of claims 8 to 10, wherein the device further comprises an evaluating system for determining the height of the cooling gap (5), which is constructed for calculating the position of the roll (2) on contact of the elements with the roll surface and in accordance with the known geometry and/or arrangement of the lever, the linear guide, the cooling shell (50), the suspension points (8) and the diameter of the roll (2).

12. The device according to any one of the preceding claims, wherein the length-variable linear guide (90, 99) is formed by a thrust joint which preferably comprises a cylinder and a piston guided in the cylinder.

13. The device according to any one of the preceding claims, wherein the length-variable linear guide (90) is formed by a drivable piston-cylinder unit.

14. The device according to any one of the preceding claims, wherein the lever (40, 44) extends in rod-shape in a plane, as considered perpendicularly to the axial direction (A) of the roll (2), to the first half (51, 61) and preferably to the end, which is present at this half (51, 61), of the cooling shell (50, 60); or extends substantially plate-shaped in a plane lying parallel to the axial direction (A) of the roll (2).

15. The device according to any one of the preceding claims, further comprising a stripper (6) for stripping cooling fluid issuing from the cooling gap (5) at an end (59, 69) of the cooling shell, wherein the stripper (6) extends away from the surface of the roll (2) preferably in plate-shaped manner so as to conduct a coolant flow, which issues from the cooling gap (5), in a direction away from the roll (2).

16. Cooling equipment (10), comprising the device (1, 1') according to any one of the preceding claims, wherein the equipment (10) comprises a substantially horizontal support frame (30) which is movable independently of the position of the roll (2) and by which the lever (40, 44), the drive unit (45) thereof and the linear guide (90, 99) are supported.

17. Method of using the device (1, 1') according to any one of claims 1 to 15 or the equipment (10) according to claim 16, comprising one or more of the following steps:
providing a work roll (2);
determining the diameter of the work roll (2);
installing the work roll (2) in a roll stand;
bringing the cooling device (1, 1') to the proximity of the roll surface, preferably by means
of the movable support frame (30) according to claim 16;
contacting the roll surface by the cooling shell (50, 60), particularly by the elements (21, 22, 24) thereof on pivotation of the lever (40, 44) in the direction of the roll surface;
calculating the position of the work roll (2);
lifting away the cooling shell (50, 60) by pivoting the lever (40, 44) away from the roll surface;
conducting cooling liquid into the cooling gap (5);
setting the spacing (h) of the cooling shell (50, 60) from the roll surface by pivoting the lever (40, 44) and selectably by setting the cooling medium pressure or the travel path of a piston-cylinder unit (90) attached to the second half of the cooling shell (60);
starting a rolling process by the work roll (2);
stopping the rolling process;
enlarging the cooling gap (5) by pivoting the lever (40, 44) and/or by moving the device (1, 1') by means of the support frame (30) according to claim 16; and
demounting the work roll (2) from the roll stand.

## Revendications

1. Dispositif (1,1') pour le refroidissement d'un cylindre (2), en particulier d'un cylindre de travail (2) pour le laminage d'un produit à laminer (3), comprenant :
une enveloppe de refroidissement (50, 60) faisant face à au moins une zone partielle de la circonférence de la surface du cylindre pour la formation d'une fente de refroidissement (5) qui peut être traversée avec un fluide de refroidissement, entre la zone partielle de la surface de cylindre et l'enveloppe de refroidissement (50, 60),
**caractérisé en ce que** le dispositif (1, 1') comprend en outre ce qui suit :
un levier (40, 44) apte à pivoter autour d'un premier point de suspension (8, 48), qui est à même de pivoter dans la direction de la surface du cylindre et qui est relié à une première moitié (51, 61) de l'enveloppe de refroidissement (50, 60), lorsqu'on regarde dans la direction circonférentielle (U) du cylindre (2), la fente de refroidissement (5) pouvant être rétrécie ou agrandie en fonction de ce que l'on souhaite via le pivotement du levier (40, 44) ; et
un guidage linéaire de longueur variable (90, 99) apte à pivoter autour d'un deuxième point de suspension (88, 48), qui est relié en rotation à la deuxième moitié (59, 69) de l'enveloppe de refroidissement (50, 60) lorsqu'on regarde dans la direction circonférentielle (U) du cylindre (2).

2. Dispositif selon la revendication 1, dans lequel les points de suspension (8, 48, 68) sont disposés face du côté de l'enveloppe de refroidissement (50, 60) qui se détourne de la surface du cylindre.

3. Dispositif selon la revendication 1 ou 2, dans lequel un axe de pivotement s'étendant respectivement en passant par les points de suspension (8, 48, 88) s'étend essentiellement parallèlement à l'axe (A) du cylindre et les deux points de suspension (8, 48, 88) coïncident de manière préférentielle.

4. Dispositif selon l'une quelconque des revendications précédentes, dans lequel le dispositif comprend en outre une buse (7, 77) pour l'introduction d'un milieu de refroidissement, de préférence d'un liquide de refroidissement, dans la fente (5) et est réalisé, pour l'introduction essentiellement tangentielle du milieu de refroidissement, dans la fente (5), en particulier dans le sens inverse par rapport à la direction de rotation (D) du cylindre (2) et est disposé, lorsqu'on regarde dans la direction circonférentielle (U), à une extrémité de l'enveloppe de refroidissement (50, 60).

5. Dispositif selon l'une quelconque des revendications précédentes, comprenant en outre :
une unité d'entraînement (45) pour le pivotement du levier (40, 44) autour du premier point de suspension (8, 48).

6. Dispositif selon la revendication 5, dans lequel l'unité d'entraînement (45, 46) comprend une unité (45) du type à piston-cylindre, qui est reliée, de préférence, à une de ses extrémités (42), en rotation à la première moitié (51, 61) du levier (40, 44) pour le pivotement du levier (40, 44) et est montée en rotation à sa deuxième extrémité (43).

7. Dispositif selon l'une quelconque des revendications précédentes, dans lequel le levier (40, 44) présente une première zone terminale (41) et une deuxième zone terminale (49), et la première zone terminale (41) est reliée en rotation à la première moitié (51, 61) de l'enveloppe de refroidissement (50, 60), lorsqu'on regarde dans la direction circonférentielle (U) du cylindre (2) et la deuxième zone terminale (49) pouvant être montée en pivotement contre le premier point de suspension (8, 48) ; et le guidage linéaire de longueur variable (90, 99) comprend une première zone terminale (91) et une deuxième zone terminale (92), la première zone terminale (91) étant reliée en rotation à la deuxième moitié (59, 69) de l'enveloppe de refroidissement (50, 60), lorsqu'on regarde dans la direction circonférentielle (U) du cylindre et la deuxième zone terminale (92) pouvant être montée en pivotement contre le deuxième point de suspension (48, 88).

8. Dispositif selon l'une quelconque des revendications précédentes, dans lequel l'enveloppe de refroidissement (50, 60) comprend, à sa première moitié (51, 61), un premier élément (21) pour la mise en contact avec la surface du cylindre et, à sa deuxième moitié (59, 69), un deuxième élément (22, 24) pour la mise en contact avec la surface du cylindre ; et dans lequel - de manière facultative - les éléments (21, 22, 24) comprennent chacun un galet rotatif (21, 22, 24) ou un coulisseau pour la mise en contact avec la surface du cylindre.

9. Dispositif selon la revendication 8, dans lequel le premier élément (21) entre en contact avec la surface du cylindre en amont de la première moitié (51, 61) de l'enveloppe de refroidissement (50, 60), lorsqu'on regarde dans la direction circonférentielle (U) du cylindre (2) et le deuxième élément (22, 24) entre en contact avec la surface du cylindre en aval de la deuxième moitié (59, 69) de l'enveloppe de refroidissement (50, 60), lorsqu'on regarde dans la direction circonférentielle (U) du cylindre (2).

10. Dispositif selon l'une quelconque des revendications précédentes, dans lequel le levier (40, .44) et le guidage linéaire (90, 99) sont disposés chaque fois en pivotement autour de leur point de suspension respectif (8, 48, 88) de manière telle que, via le pivotement du levier (40, 44) et également via le pivotement et/ou une modification de la longueur du guidage linéaire (90, 99), les éléments (21, 22, 24) peuvent être amenés en contact avec la surface du cylindre et s'en séparer à nouveau par soulèvement.

11. Dispositif selon l'une quelconque des revendications 8 à 10, dans lequel le dispositif comprend en outre un système d'évaluation pour déterminer la hauteur de la fente de refroidissement (5), qui est réalisé, lors de la mise en contact des éléments avec la surface du cylindre et en fonction de la géométrie connue et/ou de l'agencement du levier, du guidage linéaire, de l'enveloppe de refroidissement (50), des points de suspension (8) et du diamètre du cylindre (2), pour calculer la position du cylindre (2).

12. Dispositif selon l'une quelconque des revendications précédentes, dans lequel le guidage linéaire à longueur variable (90, 99) est réalisé via un joint coulissant qui comprend de préférence un cylindre et un piston guidé dans le cylindre.

13. Dispositif selon l'une quelconque des revendications précédentes, dans lequel le guidage linéaire à longueur variable (90) est réalisé via une unité du type à piston-cylindre qui peut être commandée.

14. Dispositif selon l'une quelconque des revendications précédentes, dans lequel le levier (40, 44) s'étend, sous la forme d'une tige dans un plan envisagé perpendiculairement à la direction à la direction axiale (A) du cylindre (2), jusqu'à la première moitié (51, 61) et de préférence jusqu'à l'extrémité de l'enveloppe de refroidissement (50, 60) disposée sur cette moitié (51, 61) ; ou
s'étend essentiellement sous la forme d'une plaque dans un plan situé parallèlement à la direction axiale(A) du cylindre (2).

15. Dispositif selon l'une quelconque des revendications précédentes, comprenant en outre un racloir (6) pour le raclage du fluide de refroidissement qui sort de la fente de refroidissement (5) à une extrémité (59, 69) de l'enveloppe de refroidissement, le racloir (6) s'étendant de préférence sous la forme d'une plaque à partir de la surface du cylindre (2) pour dévier de manière ciblée à l'écart du cylindre (2) un courant d'agent de refroidissement qui sort de la fente de refroidissement (5).

16. Mécanisme de refroidissement (10) comprenant le dispositif (1, 1') selon l'une quelconque des revendications précédentes, dans lequel le mécanisme (10) comprend un cadre de support (30) apte à se déplacer essentiellement en direction horizontale et indépendamment de la position du cylindre (2), par lequel le levier (40, 44), son unité de commande (45) et le guidage linéaire (90, 99) sont supportés.

17. Procédé pour l'utilisation du dispositif (1, 1') selon l'une quelconque des revendications 1 à 15 ou du mécanisme (10) selon la revendication 16, comprenant une ou plusieurs de ses étapes suivantes dans lesquelles :
on procure un cylindre de travail (2) ;
on détermine le diamètre du cylindre de travail (2) ;
on incorpore le cylindre de travail (2) dans une cage de laminoir ;
on rapproche le dispositif de refroidissement (1, 1') de la surface du cylindre, de préférence au moyen du cadre de support mobile (30) selon la revendication 16 ;
on le met en contact avec la surface du cylindre via l'enveloppe de refroidissement (50, 60) en particulier via les éléments (21, 22, 24) de cette dernière par pivotement du levier (40, 44) dans la direction de la surface du cylindre ;
on calcule la position du cylindre de travail (2) ;
on soulève l'enveloppe de refroidissement (50, 60) par pivotement du levier (40, 44) à l'écart de la surface du cylindre ;
on guide un liquide de refroidissement dans la fente de refroidissement (5) ;
on règle la distance (h) de l'enveloppe de refroidissement (50, 60) par rapport à la surface du cylindre par pivotement du levier (40, 44) et, si on le souhaite, en réglant la pression du milieu de refroidissement ou le parcours d'une unité du type à piston-cylindre (90) fixée à la deuxième moitié de l'enveloppe de refroidissement (60) ;
on démarre un processus de laminage via le cylindre de travail (2) ;
on arrête le processus de laminage ;
on augmente la fente de refroidissement (5) par pivotement du levier (40, 44) et/ou par déplacement du dispositif (1, 1') au moyen du cadre de support (30) selon la revendication 16 ; et on retire le cylindre de travail (2) de la cage de laminoir.
